# EUROPEAN PATENT APPLICATION

(11) **EP 0 905 682 A1**
(43) Date of publication of application: **31.03.1999**
(21) Application number: 98307993.0
(22) Date of filing: 30.09.1998
(51) Int. Cl.: G11B 5/48

(54) **Magnetic head mechanism**

(30) Priority: 30.09.1997 JP 266924/97
(71) Applicant: Mitsumi Electric Company Ltd., Chofu-shi Tokyo (JP)
(72) Inventor: Osaka, Tomohiko, Yamagata Mitsumi Co.,Ltd., Yamagata-shi, Yamagata (JP)
(74) Representative: Waldren, Robin Michael

(57) **Abstract**

A magnetic head mechanism (10) includes head support bases (11, 21) which are provided on a head carriage (2) and a head arm (3). The head support base (11, 21) is formed to support a magnetic head (1) at a position within a disk case (5). The magnetic heads (1) are supported in a state raised from the head carriage (2) and the head arm (3) by the head support bases (11, 21) which are resilient. A wall (14, 24) and a frame shaped part (15, 25) of the head support part (11, 21) are provided so as to enter within the disk case (5) via corresponding one of openings (5a and 5b) in the disk case (5). For this reason, even when the magnetic disk (6) rotates at a high speed, the magnetic heads (1) can follow the magnetic disk (6) by stably swaying, so that a sufficient head touch of head pressure is secured.

## Description

### BACKGROUND OF THE INVENTION

The present invention generally relates to magnetic head mechanisms, and more particularly to a magnetic head mechanism which carries out magnetic information recording and reproduction by causing a magnetic head to make sliding contact with a magnetic disk which is accommodated within a case.

In a magnetic disk unit which carries out magnetic information recording and reproduction when loaded with a disk case which accommodates a flexible magnetic disk, for example, a magnetic head mechanism is provided to carry out the magnetic information recording and reproduction by causing the magnetic head to make sliding contact with the magnetic disk which is accommodated within the disk case.

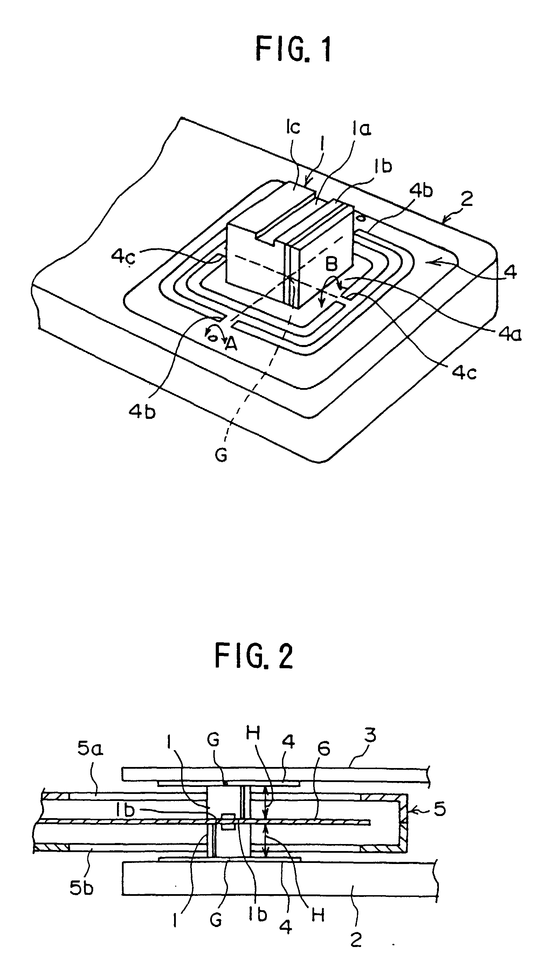

FIG. 1 is a perspective view for explaining a conventional magnetic head mechanism. In addition, FIG. 2 is a view in vertical cross section for explaining the magnetic head mechanism.

As shown in FIGS. 1 and 2, the conventional magnetic head mechanism is fixed so that magnetic heads 1 are provided at centers of gimbal plates 4 which are respectively mounted on a head carriage 2 and a head arm 3. The gimbal plates 4 are supported at positions separated from a disk case 5 so as to be positioned on the outer sides of the top and bottom surfaces of the disk case 5. The magnetic heads 1 have a height H from a mounting surface 4a of the corresponding gimbal plates 4, so that the magnetic heads 1 extend inside the disk case 5.

A groove la is formed in the magnetic head 1. A head surface 1b is formed on one side of this groove la, and a disk sliding/contacting surface 1c is formed on the other side of this groove la. A read/write (R/W) gape and an erase gap are formed at the head surface 1b, and a magnetic information recording (write) or a magnetic information reproduction (read) is carried out with respect to a magnetic disk 6 to which the head surface 1a makes sliding contact.

The gimbal plate 4 is made of a thin stainless steel plate. The gimbal plate 4 includes a pair of connecting parts 4b for supporting the mounting surfaces 4a to sway in directions A, and a pair of connecting parts 4c for supporting the mounting surfaces 4a to sway in directions B. Hence, the magnetic heads 1 fixed to the mounting surfaces 4a of the gimbal plate 4 can follow depending on a deformation of the magnetic disk 6 which is flexible by swaying in the directions A and B, so that the head surfaces la make sliding contact with the magnetic disk 6 with a predetermined head pressure.

When a pushing force of the gimbal plate 4 is considered as a vector, an operating point G of this vector is located at an intersection point of an extension line of the connecting portions 4b and an extension line of the connecting parts 4c on the gimbal plate 4, that is, at a center of the gimbal plate 4. Since the pushing force of the gimbal plate 4 acts on the entire bottom surface of the magnetic head 1, the operating point G is an imaginary point when considering the head pressure of the magnetic head 1.

On the other hand, in order to improve the sliding and following characteristics of the head surfaces la of the magnetic heads 1 with respect to the magnetic disk 6, the head carriage 2 and the head arm 3 must secure the required head pressure of the magnetic heads 1 with respect to the magnetic disk 6 because the magnetic disk 6 is flexible.

According to the conventional magnetic head mechanism, when the disk case 5 is loaded into the magnetic disk unit, openings 5a and 5b which were closed by shutters (not shown) of the disk case 5 open, and the head arm 3 turns so that the magnetic heads 1 supported on the head carriage 2 and the head arm 3 enter within the disk case 5 via the openings 5a and 5b. For this reason, the gimbal plate 4 is supported at a position separated from the disk case 5 so as to not make contact with the disk case 5.

Accordingly, the distance H from the mounting surface 4a of the gimbal plate 4 to the head surface la of the magnetic head 1 is long.

But in the conventional magnetic head mechanism, the magnetic heads 1 are fixed to the center of the gimbal plate 4 which is mounted on the head carriage 2 and the head arm 3. Consequently, the operating point G where the pushing force acts to push the head surface 1b of the magnetic head 1 against the magnetic disk 6 is located at the center of the mounting surface 4a of the gimbal plate 4 which supports the magnetic head 1.

For this reason, the distance H from the mounting surface 4a of the gimbal plate 4 to the head surface 1b of the magnetic head 1 is relatively long, and when a force acts on the magnetic head 1 in a transverse direction, the head surface 1b of the magnetic head 1 becomes unstable, thereby making it impossible in some cases to obtain a sufficient head touch or head pressure.

In order to increase the storage capacity of one magnetic disk 6, it is necessary to use as the magnetic disk 6 a medium having a coercivity (Hc) of 1500 Oe or greater, for example, and to rotate the magnetic disk 6 at a high speed on the order to approximately ten times the rotational speed of 300 rpm. In this case, the head surface 1b of the magnetic head 1 making sliding contact with the magnetic disk 6 receives a large sliding resistance due to the rotational force of the magnetic disk 6.

Hence, when the conventional magnetic head mechanism having the above described construction is provided in the magnetic disk unit which rotates the magnetic disk 6 at the high speed, the force acting on the magnetic head 1 in the transverse direction due to the high-speed rotation of the magnetic disk 6 becomes large. As a result, the magnetic head 1 supported on the gimbal plate 4 more easily sways in the directions A and B about the connection parts 4b and 4c. In other words, because of the relatively long distance H from the mounting surface 4a of the gimbal plate 4 to the head surface la of the magnetic head 1, the force acting on the head surface 1b in the transverse direction acts as a moment about the operating point G.

Therefore, in the conventional magnetic head mechanism provided in the magnetic disk unit which rotates the magnetic disk 6 at the high speed, there were problems in that the increase of the force acting in the transverse direction due to the high-speed rotation of the magnetic disk 6 causes the magnetic head 1 to sway unstably, and that a sufficient head touch or head pressure cannot be obtained.

### SUMMARY OF THE INVENTION

Accordingly, it is a general object of the present invention to provide a magnetic head mechanism which can eliminate the problems described above.

Another and more specific object of the present invention is to provide a magnetic head mechanism which is supported on a head carriage and a head arm and carries out magnetic information recording and reproduction by causing a magnetic head make sliding contact with a magnetic disk which is accommodated within a case, wherein a head support base which supports the magnetic head at a position within the case is provided on the head carriage and the head arm. According to the magnetic head mechanism of he present invention, the head support base which supports the magnetic head at the position within the case is provided on the head carriage and the head arm. For this reason, it is possible to stably support the magnetic head even if the position where the magnetic head is supported approaches the magnetic disk and the magnetic head receives a force in a transverse direction due to the high-speed rotation of the magnetic disk. As a result, even when the magnetic head makes sliding contact with the magnetic disk which rotates at the high speed, it is possible to obtain a stable head touch or head pressure of the magnetic head with respect to the magnetic disk.

Still another object of the present invention is to provide a magnetic head mechanism of the type described above, wherein the head support base is coupled to support a side surface of the magnetic head. According to the magnetic head mechanism of the present invention, the head support base is coupled to support the side surface of the magnetic head. For this reason, it is possible to increase a resistive force against the force which acts on the head surface in the transverse direction due to the high-speed rotation of the magnetic disk, so that the magnetic head is supported more stably. As a result, even when the magnetic head makes sliding contact with the magnetic disk which rotates at the high speed, it is possible to obtain a stable head touch or head pressure of the magnetic head with respect to the magnetic disk.

A further object of the present invention is to provide a magnetic head mechanism of the type described above, wherein the head support base is made of a resilient member. According to the magnetic head mechanism of the present invention, the head support base is made of the resilient member. For this reason, even when the magnetic head makes sliding contact with the magnetic disk which rotates at the high speed, it is possible to secure a satisfactory following characteristic of the magnetic head which sways while making sliding contact with the magnetic disk which rotates at the high speed. Therefore, even when the magnetic head makes sliding contact with the magnetic disk which rotates at the high speed, it is possible to obtain a stable head touch or head pressure of the magnetic head with respect to the magnetic disk.

Other objects and further features of the present invention will be apparent from the following detailed description when read in conjunction with the accompanying drawings.

### BRIEF DESCRIPTION OF THE DRAWINGS

FIG. 1 is a perspective view for explaining a conventional magnetic head mechanism;
FIG. 2 is a diagram showing a vertical cross section of the conventional magnetic head mechanism;
FIG. 3 is a diagram showing a vertical cross section of a first embodiment of a magnetic head mechanism according to the present invention;
FIG. 4 is a perspective view showing the magnetic head mechanism provided on a carriage in the first embodiment;
FIG. 5 is a diagram showing a vertical cross section of a second embodiment of the magnetic head mechanism according to the present invention; and
FIG. 6 is a perspective view showing the second embodiment of the magnetic head mechanism.

### DESCRIPTION OF THE PREFERRED EMBODIMENTS

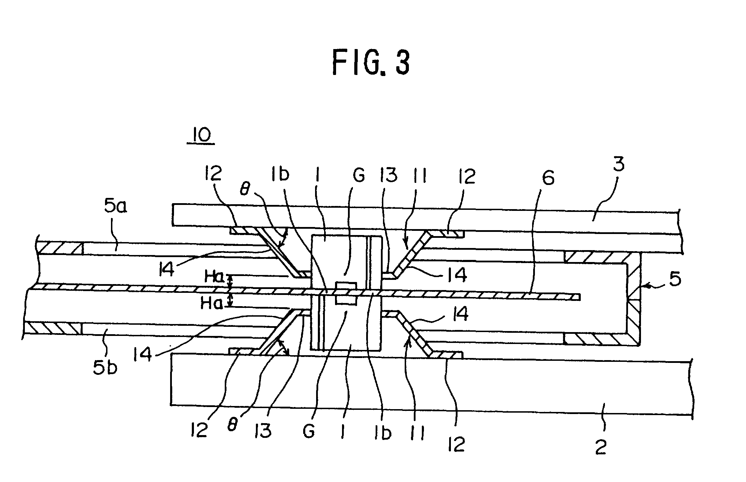

A description will now be given of the embodiments of magnetic head mechanism according to the present invention, by referring to FIGS. 3 through 6.

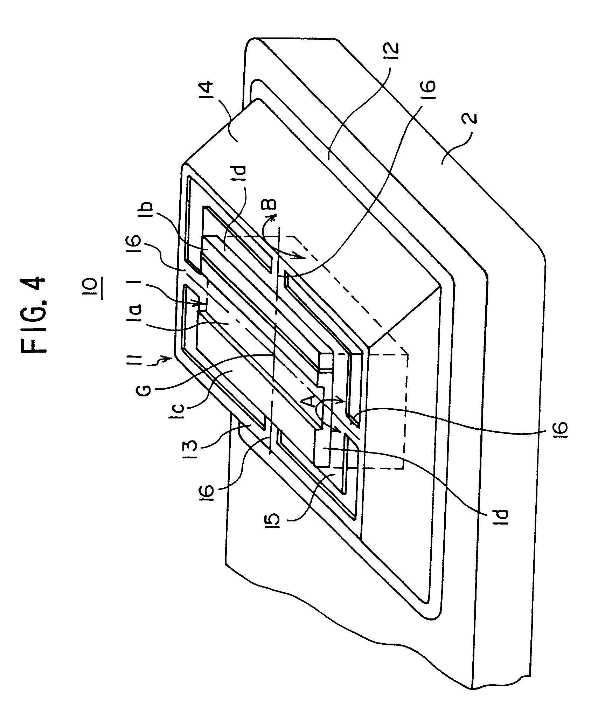

FIG. 3 is a diagram showing a vertical cross section of a first embodiment of a magnetic head mechanism according to the present invention. In addition, FIG. 4 is a perspective view of the magnetic head mechanism provided on a carriage. In FIGS. 3 and 4, those parts which are the same as those corresponding parts in FIGS. 1 and 2 are designated by the same reference numerals, and a description thereof will be omitted.

As shown in FIGS. 3 and 4, a magnetic head mechanism 10 includes head support bases 11 which are provided on the head carriage 2 and the head arm 3. As will be described later, each head support base 11 is designed to support the magnetic head 1 at a position within the disk case 5.

The head support base 11 is made of a resilient member formed from rubber or the like. Hence, a pushing force acting on the magnetic head 1 is reduced as compared to the pushing force of the conventional gimbal plate. Accordingly, the magnetic head 1 is resiliently supported by the head support base 11. The head support base 11 has a trapezoidal shape when viewed from the side, and a mounting part 12 is formed on the bottom base portion of this trapezoidal shape. The mounting part 12 of one head support base 11 is fixed to the head carriage 2, and the mounting part 12 of the other head support base 11 is fixed to the head arm 3.

A head support part 13 formed on the top portion of the trapezoidal shape fits into a side surface 1d of the magnetic head 1, and is integrally fixed by a fixing means such as thermal bonding and adhesive agent. A trapezoidal shaped wall 14 which is inclined by a predetermined angle θ (θ = 45° in this embodiment) between the mounting part 12 and the head support part 13. This inclined wall 14 is provided in four directions of the mounting part 12 and the head support part 13.

In addition, the head support part 13 includes an elongated frame shaped part 15 which fits around the four side surfaces 1d of the magnetic head 1, and connecting parts 16 which connect the frame shaped part 15 and the wall 14 at central portions along the four sides of the frame shaped part 15, similarly to the gimbal plate described above. An openings is formed at the bottom portion of the head support base 11. For example, lead wires coupled to coils of the magnetic head 1 can be drawn out from the bottom portion of the head support base 11 via this opening to be appropriately wired. In addition, an opening may be provided in each of the head carriage 2 and the head arm 3 at positions confronting the bottom surfaces of the magnetic heads 1, so that maintenance such as inspection of the lead wires and soldering can be performed with ease through the openings in the head carriage 2 and the head arm 3.

The frame shaped part 15 of the head support base 11 fits around the side surfaces 1d of the magnetic head 1, and is fixed at a position closely adjacent to the head surface 1b which makes sliding contact with the magnetic disk 6. For this reason, the magnetic head 1 is supported by the connecting parts 16 provided along the four directions which intersect at the position in the vicinity of the head surface 1b, so that the magnetic head 1 can sway in the directions A and B.

Because the magnetic head 1 is supported at the four points by the connecting parts 16 which are provided along the four directions, the magnetic head 1 sways in the directions A and B as the magnetic head 1 makes sliding contact with the rotating magnetic disk 6, and the head pressure of the head surface 1b with respect to the magnetic disk 6 is secured. Furthermore, since the head support base 11 is made of the resilient member formed from rubber or the like, the structure as a whole is flexible, and not only the connecting parts 16 but also the wall 14 undergoes a resilient deformation particularly when the magnetic disk 6 rotates at the high speed. As a result, the following characteristic of the magnetic head 1 as the magnetic head 1 makes sliding contact with the magnetic disk 6 is improved.

On the other hand, the magnetic head 1 is supported in a state raised from the corresponding head carriage 2 or the head arm 3 by the head support base 11. For this reason, the wall 14 and the frame shaped part 16 of the head support base 11 are designed to enter within the disk case 5 via the opening 5a or 5b of the disk case 5.

Accordingly, the operating point G of the pushing force of the head support base 11 is located at a position where extension lines of the connecting parts 16 provided along the four directions intersect, that is, a center position on the same plane as the top portion of the head support part 13 which is formed to surround the side surfaces 1d of the magnetic head 1. A distance Ha from the operating point G to the head surface 1b of the magnetic head 1 is shorter than that of the conventional magnetic head mechanism (refer to FIG. 2), and is reduced to approximately 1/2 to 1/4 of the conventional distance H.

Therefore, the pushing force acting on the magnetic head 1 acts on the operating point G in the vicinity of the head surface 1b. For this reason, the head support base 1 increases the strength of the magnetic head mechanism 10 with respect to the force which acts on the head surface 1b in the transverse direction due to the high-speed rotation of the magnetic disk 6, and it is possible to more stably support the magnetic head 1. Even in a case where the magnetic head 1 makes sliding contact with the magnetic disk 6 which rotates at the high speed, it is possible to stabilize the head touch or head pressure of the magnetic head 1 with respect to the magnetic disk 6.

In the magnetic head mechanism 10, when the disk case 5 is loaded into the magnetic disk unit, the openings 5a and 5b which were closed by shutters (not shown) of the disk case 5 open, and the head arm 3 turns so that the magnetic heads 1 supported on the head support bases 11 provided on the head carriage 2 and the head arm 3 enter within the disk case 5 via the openings 5a and 5b. For this reason, the gimbal plate 4 is supported at a position separated from the disk case 5 so as to not make contact with the disk case 5.

Then, the head surface 1b of each magnetic head 1 is pushed against the magnetic disk 6. In this state, because the operating point G of the pushing force is provided in the vicinity of the head surface 1b of the magnetic head 1, the head surface 1b of the magnetic head 1 is stable even when a force acts on the magnetic head 1 in the transverse direction.

For example, when the magnetic disk 6 is rotated at the high speed, the head surface 1b of the magnetic head 1 which makes sliding contact with the magnetic disk 6 receives a large sliding resistance due to the rotational force of the magnetic disk 6.

For this reason, when the magnetic head mechanism 10 having the above described construction is provided in the magnetic disk unit which rotates the magnetic disk 6 at the high speed, the force acting on the magnetic head 1 in the transverse direction increases due to the high-speed rotation of the magnetic disk 6. However, since the side surfaces 1d in the vicinity of the head surface la of the magnetic head 1 are supported by the head support base 11, the magnetic head 1 makes sliding contact with the magnetic disk 6 in a stably supported state.

Therefore, according to the magnetic head mechanism 10, even if the magnetic disk 6 is rotated at the high speed in the magnetic disk unit and the transverse force in the sliding direction acting on the magnetic head 1 increases due to the high-speed rotation of the magnetic disk 6, the magnetic head 1 can sway stably and follow the magnetic disk 6, so that a sufficient head touch or head pressure is secured.

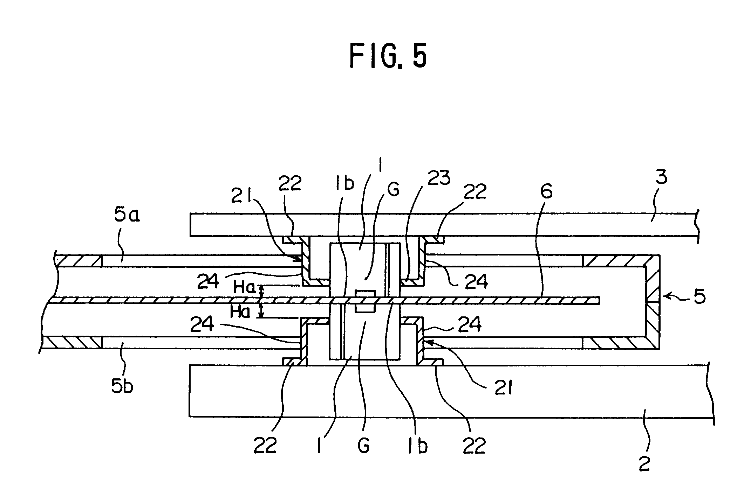

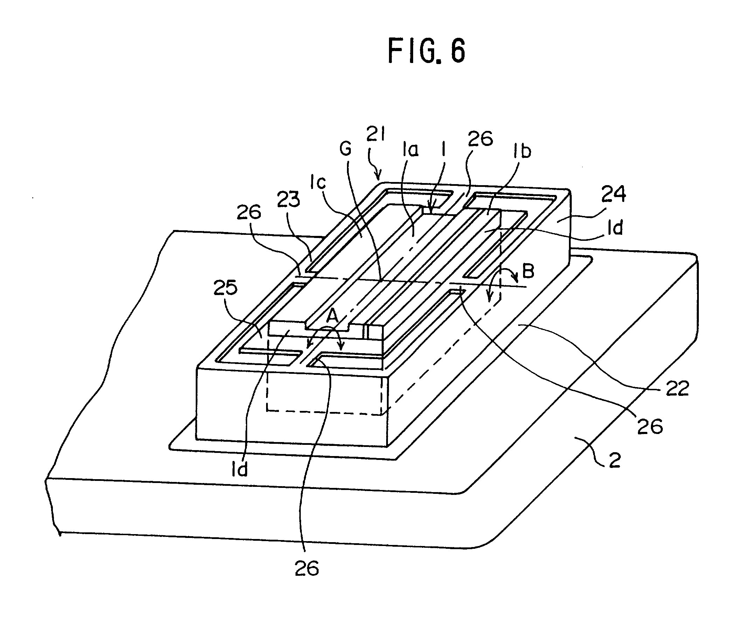

FIG. 5 is a diagram showing a vertical cross section of a second embodiment of the magnetic head mechanism according to the present invention. In addition, FIG. 6 is a perspective view of the second embodiment of the magnetic head mechanism. In FIGS.5 and 6, those parts which are the same as those corresponding parts in FIGS.3 and 4 of the above described first embodiment are designated by the same reference numerals, and a description thereof will be omitted.

As shown in FIGS. 5 and 6, a head support base 21 has a rectangular box shape when viewed from the side, and a mounting part 22 is formed at the bottom base portion of this rectangular box shape. The mounting part 22 of one head support base 21 is fixed to the head carriage 2, and the mounting part 22 of the other head support base 21 is fixed to the head arm 3. A head support part 23 formed at the top portion of the head support base 21 fits around the side surfaces ld of the magnetic head 1, and the head support part 23 and the side surfaces 1d of the magnetic head 1 are integrally fixed by a fixing means such as thermal bonding and adhesive agent. A vertical wall 24 is formed between the mounting part 22 and the head support part 23.

Similarly to the head support base 11 described above, the head support part 23 includes an elongated frame shaped part 25 which fits around the four side surfaces 1d of the magnetic head 1, and connecting parts 26 which connect the frame shaped part 25 and the wall 24 at central portions along the four sides of the frame shaped part 25.

The frame shaped part 25 of the head support base 21 fits around the side surfaces 1d of the magnetic head 1, and is fixed at a position closely adjacent to the head surface 1b which makes sliding contact with the magnetic disk 6. For this reason, the magnetic head 1 is supported by the connecting parts 26 provided along the four directions which intersect at the position in the vicinity of the head surface 1b, so that the magnetic head 1 can sway in the directions A and B.

Because the magnetic head 1 is supported at the four points by the connecting parts 26 which are provided along the four directions, the magnetic head 1 sways in the directions A and B as the magnetic head 1 makes sliding contact with the rotating magnetic disk 6, and the head pressure of the head surface 1b with respect to the magnetic disk 6 is secured. Furthermore, since the head support base 21 is made of the resilient member formed from rubber or the like, the structure as a whole is flexible, and not only the connecting parts 26 but also the wall 24 undergoes a resilient deformation particularly when the magnetic disk 6 rotates at the high speed.

As a result, the following characteristic of the magnetic head 1 as the magnetic head 1 makes sliding contact with the magnetic disk 6 is improved. Thus, even when the magnetic head 1 makes sliding contact with the magnetic disk 6 which rotates at the high speed, it is possible to stabilize the head touch or head pressure of the magnetic head 1 with respect to the magnetic disk 6.

The head support base 21 is constructed so that the wall 24 extends vertically. Hence, compared to the head support base 11 described above, the spaces required to mount the head support bases 21 on the head carriage 2 and the head arm 3 are reduced as compared to the spaces required to mount the head support bases 11, and the structure as a whole is more compact.

In addition, when entering the openings 5a and 5b of the disk case 5, the head support bases 21 can enter within the disk case 5 in a state sufficiently separated from the openings 5a and 5b. For this reason, even when the relative positions of the openings 5a and 5b of the disk case 5 and the head support bases 21 changes due to inconsistencies in the dimensions of parts introduced during the fabricating process, it is possible to make the magnetic heads 1 make sliding contact with the magnetic disk 6 without making contact with the disk case 5.

In the embodiments described above, the head support bases 11 and 21 are made of rubber or the like. However, the material used for the head support bases 11 and 21 is of course not limited to rubber, and it is also possible to form the head support bases 11 and 21 from thin plates made of metal such as stainless steel, for example.

Further, the present invention is not limited to these embodiments, but various variations and modifications may be made without departing from the scope of the present invention

## Claims

1. A magnetic head mechanism which is supported on a head carriage and a head arm and carries out magnetic information recording and reproduction by causing a magnetic head to make sliding contact with a magnetic disk which is accommodated within a case, characterized by a head support base (11, 21) which supports the magnetic head (1) at a position within the case (5) is provided on the head carriage (2) and the head arm (3).

2. The magnetic head mechanism as claimed in claim 1, characterized in that the head support base (11, 21) is coupled to support a side surface (1d) of the magnetic head (1).

3. The magnetic head mechanism as claimed in claim 1 or 2, characterized in that the head support base (11, 21) is made of a resilient member.

4. The magnetic head mechanism as claimed in any of claims 1 to 3, characterized in that the head support base (11, 21) is provided with respect to each of a pair of magnetic heads (1), and that each of two head support bases (11, 21) supports at least two side surfaces (1d) of a corresponding one of the pair of magnetic heads (1).

5. A magnetic disk unit comprising a magnetic head mechanism which is supported on a head carriage and a head arm and carries out magnetic information recording and reproduction by causing a magnetic head to make sliding contact with a magnetic disk which is accommodated within a case,
characterized by a head support base (11, 21) which supports the magnetic head (1) at a position within the case (5) is provided on the head carriage (2) and the head arm (3).
